# EUROPEAN PATENT APPLICATION

(11) **EP 4 538 841 A1**
(43) Date of publication of application: **16.04.2025**
(21) Application number: 24759047.4
(22) Date of filing: 30.08.2024
(51) Int. Cl.: G06F 3/0484, G06F 1/16, H04W 4/80, H04W 88/02

(54) **ELECTRONIC DEVICE SUPPORTING PAIRING AND CONTROL METHOD THEREOF**

(30) Priority: 31.08.2023 KR 20230115820; 07.11.2023 KR 20230153076
(71) Applicant: Samsung Electronics Co., Ltd., Gyeonggi-do, 16677 (KR)
(72) Inventor: KOH, Sanghyuk, Suwon-si Gyeonggi-do 16677 (KR)
(74) Representative: HGF
(86) International application number: PCT/KR2024/013031
(87) International publication number: WO 2025/048532

(57) **Abstract**

An electronic device is disclosed. An electronic device according to the disclosure may comprise a display, communication circuitry, at least one sensor, at least one processor electrically coupled with the display, the communication circuitry, and the at least one sensor, and memory storing instructions. The instructions, when executed by the at least one processor individually or collectively, may cause the electronic device to receive, from an external electronic device, information related to the external electronic device connected to a network, through the communication circuitry, identify a folding state of the external electronic device, based on the information related to the external electronic device, identify a folding state of the electronic device through the at least one sensor, determine a first screen to be displayed on the display of the electronic device and a second screen to be displayed on the external electronic device, based on the folding state of the electronic device and the folding state of the external electronic device.

## Description

### [Technical Field]

Various embodiments of the disclosure relate to an electronic device supporting pairing and a method for controlling the same.

### [Background Art]

More and more services and additional functions are being provided through electronic devices, such as smartphones or other portable electronic devices. To meet the needs of various users and improve the use efficiency of electronic devices, communication service carriers and device manufacturers are striving to develop electronic devices with differentiated and diversified functionalities. Accordingly, various functions that are provided through electronic devices are evolving more and more.

As electronic devices are highly integrated, and high-speed or high-volume wireless communication becomes commonplace, electronic devices, such as mobile communication terminals, are being equipped with various functions. For example, an electronic device comes with the integrated functionality, including an entertainment function, such as for playing video games, a multimedia function, such as for playing music/videos, a communication and security function for mobile banking, and a scheduling or e-wallet function. These electronic devices have been downsized to be conveniently carried by users.

As mobile communication services extend to multimedia service sectors, the display of the electronic device may be increased to allow the user satisfactory use of multimedia services as well as voice call or text messaging services. Accordingly, a foldable flexible display may be disposed on the entire area of the housing structure so that the device is foldable and has a large display area.

### [Disclosure of Invention]

### [Solution to Problems]

According to an embodiment, an electronic device may comprise a display, communication circuitry, at least one sensor, at least one processor electrically connected with the display, the communication circuitry, and the at least one sensor, and memory storing instructions. The instructions, when executed by the at least one processor, may cause the electronic device to receive information related to an external electronic device connected to a network through the communication circuitry. The instructions, when executed by the at least one processor, may cause the electronic device to identify a folding state of the external electronic device, based on the information related to the external electronic device. The instructions, when executed by the at least one processor, may cause the electronic device to identify a folding state of the electronic device through the at least one sensor. The instructions, when executed by the at least one processor, may cause the electronic device to determine a first screen to be displayed on the display of the electronic device and a second screen to be displayed on the external electronic device, based on the folding state of the electronic device and the folding state of the external electronic device.

According to an embodiment, a method for operating an electronic device may comprise receiving information related to an external electronic device connected to a network, from the external electronic device through communication circuitry of the electronic device. The method for operating the electronic device may comprise identifying a folding state of the external electronic device, based on the information related to the external electronic device. The method for operating the electronic device may comprise identifying a folding state of the electronic device through at least one sensor of the electronic device. The method for operating the electronic device may comprise determining a first screen to be displayed on the display of the electronic device and a second screen to be displayed on the external electronic device, based on the folding state of the electronic device and the folding state of the external electronic device.

According to an embodiment, in a non-transitory computer-readable recording medium storing one or more programs, the one or more programs may comprise instructions enabling an electronic device including a display, communication circuitry, at least one sensor, and at least one processor electronically connected to the display, the communication circuitry, and the at least one sensor to receive information related to an external electronic device connected to a network from the external electronic device through the communication circuitry. The one or more programs may comprise instructions enabling the electronic device to identify a folding state of the external electronic device, based on the information related to the external electronic device. The one or more programs may comprise instructions enabling the electronic device to identify a folding state of the electronic device through at least one sensor of the electronic device. The one or more programs may comprise instructions enabling the electronic device to determine a first screen to be displayed on the display of the electronic device and a second screen to be displayed on the external electronic device, based on the folding state of the electronic device and the folding state of the external electronic device. Advantageously, a user may extend the display of the electronic device across both the electronic device and the external electronic device in a simple and intuitive manner. This improves the convenience for the user and improves the speed in which the user may obtain the expanded display. Further advantageously, it is not necessary for a user to manually align the displays of the two devices because the electronic device is able to determine a first screen (for the electronic device) and a second screen (for the external electronic device) based on received or identified distance information and angle/state information relating to the two devices. Further advantageously, the user does not need to manually select a mirroring or extension pairing mode through navigating a user interface. Instead the user is easily able to set the pairing mode by adjusting a folding state of one or both of the electronic device and the external electronic device. By automatically setting and providing a pairing mode based on one or more of the proximity of the two devices, the positions of the two devices, the angles of the two devices, the angles between the two devices, and the states of the two devices, the pairing mode may be optimized according to the situation. The user may therefore easily set up two devices to be used as an extended display area.

### [Brief Description of Drawings]

FIG. 1 is a block diagram illustrating an electronic device in a network environment according to an embodiment;
FIG. 2 is a block diagram illustrating an electronic device according to an embodiment of the disclosure;
FIG. 3A is a flowchart illustrating a pairing operation of an electronic device according to an embodiment of the disclosure;
FIG. 3B is a flowchart illustrating a pairing operation of an electronic device according to an embodiment of the disclosure;
FIG. 4A is an example view illustrating an unfolded state of an electronic device according to an embodiment of the disclosure;
FIG. 4B is an example view illustrating a vertical mode and a horizontal mode of an electronic device according to an embodiment of the disclosure;
FIG. 4C is an example view illustrating a standing mode of an electronic device according to an embodiment of the disclosure;
FIG. 5A is a view illustrating a communication connection establishment operation of an electronic device according to an embodiment of the disclosure;
FIG. 5B is a view illustrating a pairing operation of an electronic device according to an embodiment of the disclosure;
FIG. 5C is a flowchart illustrating a pairing operation of an electronic device according to an embodiment of the disclosure;
FIG. 6A is a view illustrating a communication connection establishment operation of an electronic device according to an embodiment of the disclosure;
FIG. 6B is a view illustrating a pairing operation of an electronic device according to an embodiment of the disclosure;
FIG. 7A is a flowchart illustrating a pairing operation of an electronic device according to an embodiment of the disclosure;
FIG. 7B is a flowchart illustrating a pairing operation of an electronic device according to an embodiment of the disclosure;
FIG. 7C is a flowchart illustrating a pairing operation of an electronic device according to an embodiment of the disclosure;
FIG. 8 is an example view illustrating an input interface displayed through a display of an electronic device according to an embodiment of the disclosure;
FIG. 9A is a view illustrating a communication connection establishment operation of an electronic device according to an embodiment of the disclosure;
FIG. 9B is a view illustrating a pairing operation of an electronic device according to an embodiment of the disclosure; and
FIG. 10 is a view illustrating a pairing operation of an electronic device according to an embodiment of the disclosure.

### [Mode for the Invention]

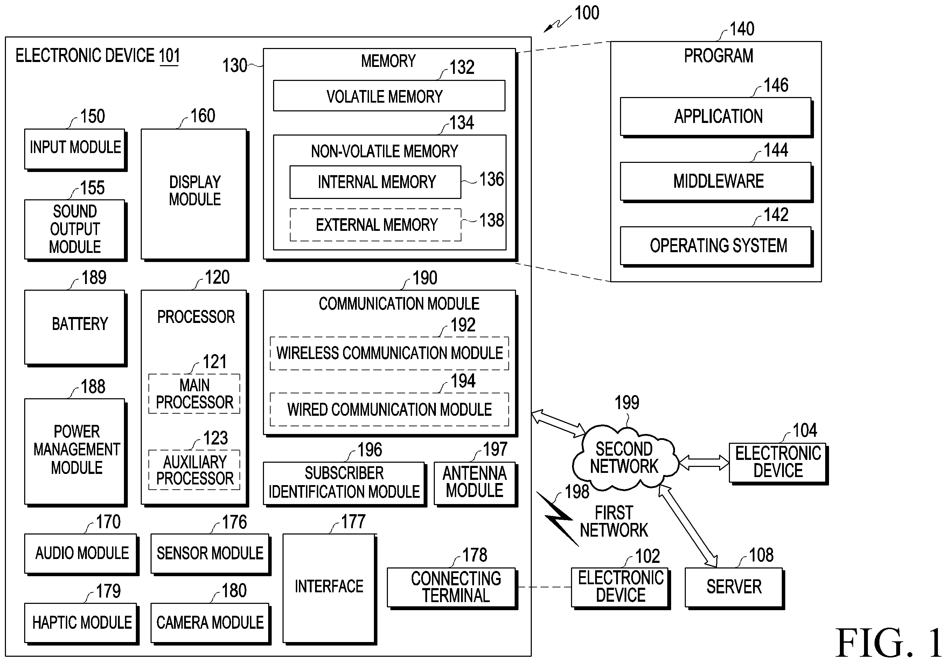

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197. According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

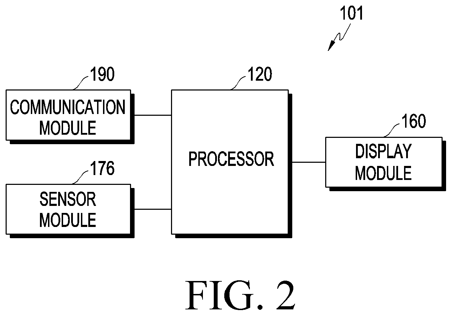

FIG. 2 is a block diagram illustrating an electronic device according to an embodiment of the disclosure.

In an embodiment, referring to FIG. 2, an electronic device 101 (e.g., the electronic device 101 of FIG. 1) may include a processor 120 (e.g., the processor 120 of FIG. 1), a display module 160 (e.g., the display module 160 of FIG. 1), a sensor module (e.g., the sensor module 176 of FIG. 1), and a communication module 190 (e.g., the communication module 190 of FIG. 1).

In an embodiment, the display module 160 may display a screen associated with an application executed by the electronic device 101. The display module 160 may display another screen associated with an application according to the folding state of the electronic device 101. That is, the application screen may be displayed according to the folding state of the electronic device so that the usage of the visible portion of the display module is optimized. The folding state of the electronic device 101 may include an open state or a closed state. The open state may comprise a range of angles indicating that the electronic device is at least partially unfolded. The operation mode of the electronic device 101 in the open state may include a horizontal mode, a vertical mode, or a standing mode. The display module 160 may be, e.g., a touch screen for changing a screen displayed corresponding to a user input (e.g., a touch event or a voice command).

In an embodiment, the sensor module 176 may estimate the posture of the electronic device 101. The posture of the electronic device relates to one or more of a position, orientation or folding angle of the electronic device and is indicative of a manner in which the electronic device is being held or supported. The posture of the electronic device 101 may include a posture angle of the electronic device 101. The posture angle of the electronic device 101 may include an angle in the direction of the center of gravity of the electronic device 101 with respect to the direction of gravity. The posture angle of the electronic device 101 may include a surface vector or a line vector corresponding to the folding line of the housing of the electronic device 101. The posture angle of the electronic device 101 may include a normal vector in a direction perpendicular to at least a partial surface of the display module 160.

In an embodiment, the communication module 190 may establish a communication connection (e.g., a short-range wireless communication connection) with an external electronic device (e.g., at least one of the electronic device 102, the electronic device 104, or the server 108 of FIG. 1). The communication module 190 may include a UWB module that supports positioning of the external electronic device. The communication module 190 may include a Wi-Fi module for transmitting or receiving information associated with pairing with the external electronic device through an access point associated with Wi-Fi. The communication module 190 may include a Bluetooth module (e.g., a BLE module) that supports pairing with the external electronic device.

In an embodiment, the processor 120 may perform an overall operation for providing a multi-view function based on pairing with the external electronic device. The processor 120 may provide an expanded view by controlling the external electronic device. The processor 120 may control the display module 160 to display at least a portion of an expanded screen associated with an application executed by the electronic device 101. The processor 120 may control the external electronic device to display the remaining portion of the expanded screen associated with the application executed by the electronic device 101. The processor 120 may transmit through the communication module 190, a control message for displaying the remaining portion of the expanded screen through the display module of the external electronic device to the external electronic device. The processor 120 may provide a mirror view by controlling the external electronic device. The processor 120 may control the display module 160 to display a screen associated with an application executed by the electronic device 101. The processor 120 may control the external electronic device to display at least partially the same screen as the screen associated with the application executed by the electronic device 101. For example, the processor 120 may transmit, to the external electronic device through the communication module 190, a control message for displaying at least partially the same screen as the screen associated with the application executed by the electronic device 101 through the display module of the external electronic device. The electronic device 101 may identify whether the information received from the sensor module 176 and/or the external electronic device meets a condition associated with providing the expanded view. The electronic device 101 may enhance user convenience by providing an expanded view through the display module 160 and the display module of the external electronic device. That is, the display of the electronic device and the display of the external electronic device may effectively form a single large display to improve a user experience.

In an embodiment, although FIG. 2 illustrates that the electronic device 101 includes only the processor 120, the display module 160, the sensor module 176, and the communication module 190 for convenience of description, those skilled in the art will readily understand that the electronic device 101 of FIG. 2 may further include the components illustrated in FIG. 1.

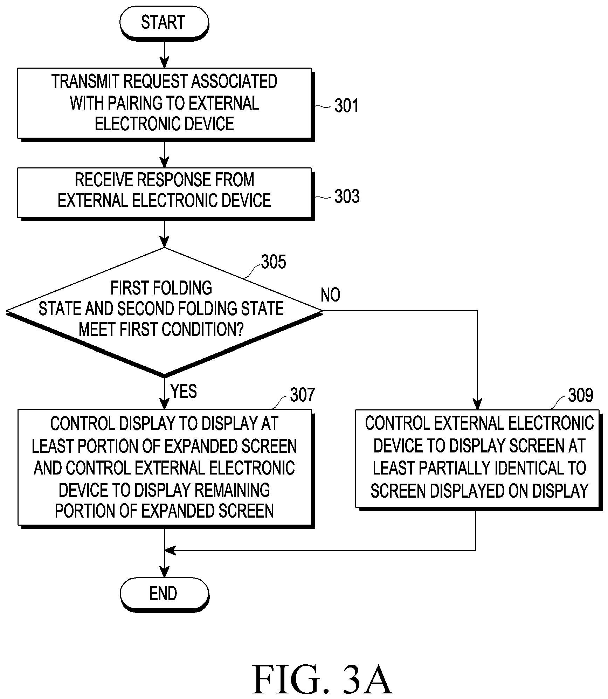

FIG. 3A is a flowchart illustrating a pairing operation of an electronic device to an external electronic device according to an embodiment of the disclosure.

Referring to FIG. 3A, in operation 301, an electronic device (e.g., at least one of the electronic device 101 of FIG. 1, the electronic device 101 of FIG. 2, the processor 120 of FIG. 1, or the processor 120 of FIG. 2) may transmit a request associated with pairing to an external electronic device (e.g., at least one of the electronic device 102, the electronic device 104, or the server 108 of FIG. 1). That is, the electronic device may transmit a pairing request signal to the external electronic device. The electronic device 101 may be configured to identify whether to provide an expanded view when pairing is performed based on a user input. The electronic device 101 may be configured to provide a mirror view when pairing is performed based on a user input. When the electronic device 101 is configured to provide the mirror view when pairing is performed, the electronic device 101 may provide the mirror view based on establishing the communication connection with the external electronic device without operations 305 and 307. That is, operations 305 and 307 may not be performed when the electronic device 101 operates in a mirror view mode when the electronic device is paired with the external electronic device. The electronic device 101 may identify a user input for activating the multi-view function. That is, the electronic device may receive a user input, via an input means, where the user input is indicative of an intention of the user to activate a multi-view function. The electronic device 101 may identify at least one external electronic device whose physical distance to the electronic device 101 is less than or equal to a threshold, in response to receiving a user input for activating the multi-view function. That is, when the user input for activating the multi-view function is received by the electronic device, the electronic device may perform a search for at least one external electronic device within a vicinity or predetermined distance of the electronic device. The electronic device searches for external electronic devices to which the electronic device may be paired. The electronic device 101 may identify at least one external electronic device through, e.g., a short-range wireless communication module (e.g., at least one of a Wi-Fi module, a Bluetooth module, and/or a UWB module). The electronic device 101 may provide the user with a list associated with the identified at least one external electronic device. That is, the electronic device may provide the user with a list comprising the one or more external electronic devices identified during the search for external electronic devices. The list may be limited to the external electronic devices to which the electronic device may be paired. For example, the list may not include external electronic devices to which the electronic device is unable to pair. The electronic device 101 may provide the list associated with at least one identified external electronic device to the user through at least one of, e.g., the display module 160, the sound output module 155, or the haptic module 179. The electronic device 101 may identify a user input associated with selection of the external electronic device to perform pairing. That is, the electronic device may identify or detect a user input to select one or more of the external electronic devices on the list of external electronic devices, where the selection of the one or more external electronic devices is indicative of a user's intention for the electronic device to pair with the selected external electronic device(s). The user input may be received by an input means. The input means may be the same input means which received the initial input for activating the multi-view function, or may be a different input means. The electronic device 101 may identify identification information about the external electronic device corresponding to the user input, based on or in response to the user input associated with selection of the external electronic device. That is, in response to the user input to select one or more external electronic devices from the list of external electronic devices, the electronic device may obtain identification information associated with the selected external device(s). The electronic device may obtain the identification information using a database, or by receiving an identification information signal from the selected external electronic device, or by receiving an identification information signal from a different external electronic device (such as a server). The identification information signal from either the selected external electronic device or the different external electronic device may be received in response to the electronic device transmitting an identification information request signal to the selected or different external electronic device. The electronic device 101 may transmit a request associated with pairing to the identified external electronic device through or using a communication module (e.g., the communication module 190 of FIG. 1). That is, the electronic device may transmit a pairing request signal to the identified (selected) external electronic device.

According to an embodiment, in operation 303, the electronic device 101 may receive a response from the external electronic device. The electronic device 101 may establish a communication connection with the external electronic device based on or in response to receiving a response (response signal) from the external electronic device. The electronic device 101 may identify information associated with the state of the external electronic device from the response. That is, the response signal received by the electronic device from the external electronic device may include information associated with the state of the external electronic device, and the electronic device may identify this information. The electronic device 101 may identify a distance between the electronic device 101 and the external electronic device. **In an** embodiment, after establishing the communication connection with the external electronic device, the electronic device 101 may identify, determine, calculate, obtain, receive the distance between the electronic device 101 and the external electronic device. For example, the electronic device 101 may identify the distance between the electronic device 101 and the external electronic device through the positioning function supported by the UWB module included in the communication module 190. The UWB module may exchange positioning information with the UWB module of the external electronic device through a plurality of antennas included in the electronic device 101. The UWB module may identify the distance between the electronic device 101 and the external electronic device based on a phase difference of arrival (PDoA) algorithm, but it will be easily understood by one of ordinary skill in the art that the disclosure is not limited thereto. In an embodiment, the electronic device 101 may identify an angle difference between the electronic device 101 and the external electronic device, based on the information included in the response. The electronic device 101 may identify an angle difference between the posture angle of the electronic device 101 and the posture angle of the external electronic device. The electronic device 101 may identify the posture angle of the electronic device 101 based on the information identified by the sensor module 176. The electronic device 101 may identify the posture angle of the external electronic device based on the information included in the response signal received from the external electronic device. In an embodiment, the electronic device 101 may identify the folding state of the external electronic device, based on the information included in the response. For example, the electronic device 101 may identify whether the folding state of the external electronic device is the open state or the closed state, based on the information included in the response. The electronic device may identify an extent of an open state or closed state of the external electronic device based on the information included in the response. That is, the electronic device may identify a folding angle of the external electronic device based on the information included in the response. The electronic device 101 may identify whether the folding state of the external electronic device is any one of the horizontal mode, the vertical mode, or the standing mode among the open states. In an embodiment, the electronic device 101 may identify information associated with at least one of the types of the input interfaces of the external electronic device. The information associated with the type of the input interface corresponding to the external electronic device may include label information of an integer type. The label information of an integer type may be a binary code indicative of the type of input interface of the external electronic device. The electronic device 101 may identify whether the type of the input interface corresponding to the application executed by the electronic device 101 matches the type of the input interface displayed by the external electronic device, based on the label information. The information associated with the type of the input interface corresponding to the external electronic device is not limited to the above-described example. For example, information associated with the type of the input interface corresponding to the external electronic device may be transmitted to the electronic device 101 in the form of a binary code. In an embodiment, after operation 303, the electronic device 101 may transmit information associated with the state of the electronic device 101 to the external electronic device and may receive the information associated with the state of the external electronic device from the external electronic device. The electronic device 101 may perform a positioning operation using a UWB module and transmit information associated with the state of the electronic device 101 including one or more of distance data, sensor data, posture information, or input interface information to the external electronic device. The electronic device 101 may use a short-range communication module (e.g., at least one of a UWB module, a Wi-Fi module, or a Bluetooth module) to transmit state-related information to the external electronic device. The electronic device 101 may transmit and receive (or exchange) information associated with the state of the electronic device 101 and information associated with the state of the external electronic device, thereby identifying information associated with at least one of the distance between the electronic device 101 and the external electronic device, the angle difference between the electronic device 101 and the external electronic device, the folding state of the external electronic device, or the type of the input interface of the external electronic device.

According to an embodiment, in operation 305, the electronic device may identify whether the first folding state and the second folding state meet a first condition. For example, the electronic device may identify whether the first folding state of the electronic device 101 and the second folding state of the external electronic device meet the first condition for displaying an expanded screen, based on the information included in the response and the information identified by the sensor module 176. For example, the electronic device 101 may identify that the first condition is met, based on identifying that the folding state of both the electronic device 101 and the external electronic device is the standing mode. For example, the electronic device 101 may identify that the first condition is not met, based on identifying that the folding state of any one of the electronic device 101 or the external electronic device is not the standing mode.

According to an embodiment, based on identifying that the first condition is met (Yes in operation 305), in operation 307, the electronic device 101 may control the display module 160 to display at least a portion of the expanded screen and control the external electronic device to display the remaining portion of the expanded screen. The electronic device 101 may enhance user convenience by providing an expanded view through the display module 160 and the display module of the external electronic device.

According to an embodiment, based on identifying that the first condition is not met (No in operation 305), in operation 309, the electronic device 101 may control the external electronic device to display a screen at least partially the same as the screen displayed on the display module 160. The electronic device 101 may provide the mirror view based on identifying that the condition for providing the expanded view is not met.

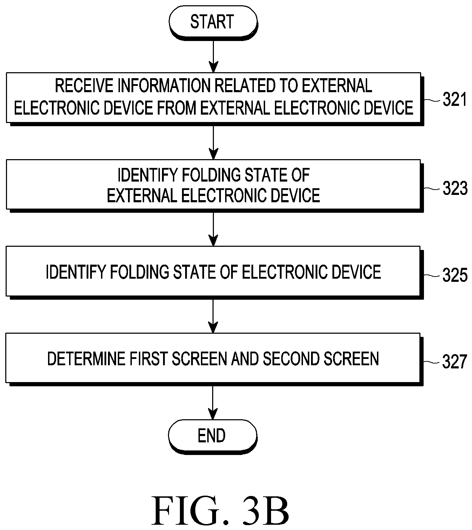

FIG. 3B is a flowchart illustrating a pairing operation of an electronic device according to an embodiment of the disclosure.

Referring to FIG. 3B, in operation 321, an electronic device (e.g., at least one of the electronic device 101 of FIG. 1, the electronic device 101 of FIG. 2, the processor 120 of FIG. 1, or the processor 120 of FIG. 2) may receive information related to an external electronic device from the external electronic device. The electronic device may receive information related to the external electronic device from the external electronic device connected via a network through a communication circuit (e.g., the communication module 190 of FIG. 1 or 2). The electronic device may receive information related to the external electronic device from the external electronic device connected through a short-range wireless communication network. The short-range wireless communication scheme supported by the short-range wireless communication network may include Wi-Fi communication, Bluetooth, and/or UWB communication, but is not limited thereto. The electronic device may receive information associated with the external electronic device based on (i.e. using) the communication connection connected to the external electronic device through the communication circuit. The information associated with the external electronic device may include, but is not limited to, at least one of information for measuring the distance between the electronic device and the external electronic device, information associated with the posture angle of the external electronic device, information associated with the posture angle between external electronic devices, information associated with the folding state of the external electronic device, or information associated with the type of an input interface corresponding to the external electronic device.

According to an embodiment, in operation 323, the electronic device may identify the folding state of the external electronic device. The electronic device may identify the folding state of the external electronic device based on the received information related to the external electronic device. The folding state of the electronic device may include an open state or a closed state. The operation mode of the electronic device in the open state may include a horizontal mode, a vertical mode, or a standing mode. The folding state of the electronic device may further include a semi-open state.

According to an embodiment, in operation 325, the electronic device may identify the folding state of the electronic device. The electronic device may identify the folding state of the electronic device through at least one sensor of the electronic device. In an embodiment, the folding state of the electronic device may be determined depending on whether the folding angle identified through at least one sensor (e.g., the sensor module 176 of FIG. 1 or FIG. 2) is within a set range section. The electronic device may identify whether the folding state of the electronic device is the closed state or the open state based on the sensor data obtained by the at least one sensor. The electronic device may identify whether the folding state of the electronic device is the closed state, the open state, or the semi-open state based on the sensor data obtained by the at least one sensor. The electronic device may determine the operation mode of the electronic device in the semi-open state or the open state as one of the horizontal mode, the vertical mode, or the standing mode, based on the sensor data obtained by the at least one sensor. In an embodiment, the application processor (e.g., the main processor 121 of FIG. 1) may identify whether the folding state of the electronic device is the closed state, the open state, or the semi-open state by receiving information associated with the folding state of the electronic device from at least one sensor of the electronic device.

According to an embodiment, in operation 327, the electronic device may determine a first screen and a second screen. The electronic device may determine a first screen to be displayed on the display of the electronic device and a second screen to be displayed on the external electronic device, based on the folding state of the electronic device and the folding state of the external electronic device. For example, the electronic device may identify whether the folding state of the electronic device and the folding state of the external electronic device meet a condition for displaying the expanded screen. The condition for displaying the expanded screen may include that both the operation mode corresponding to the folding state of the electronic device and the operation mode corresponding to the folding state of the external electronic device are the standing mode.

In an embodiment, the electronic device may identify that the condition is met, based on identifying that the operation mode corresponding to the folding state of the electronic device and the operation mode corresponding to the folding state of the external electronic device both are the standing mode. The electronic device may determine the first screen to be displayed on the display (e.g., the display module 160 of FIG. 1 or 2) of the electronic device and the second screen to be displayed on the external electronic device (e.g., the display of the external electronic device), based on the condition being met. For example, the electronic device may control the display module of the electronic device to display at least a portion of the expanded screen, and may control the external electronic device to display the remaining portion of the expanded screen. The remaining portion of the expanded screen is the portion of the screen which is not displayed on the electronic device. When both the electronic device and the external electronic device operate in the standing mode, the electronic device may provide an expanded view through the display module and the display module of the external electronic device, thereby enhancing user convenience. Moreover, the user does not need to manually align the display modules of the electronic device and the external electronic device to ensure that the expanded screen is shown correctly, thereby further improving the user experience.

In an embodiment, the electronic device may identify that the condition is not met, based on identifying that the operation mode corresponding to the folding state of the electronic device or the operation mode corresponding to the folding state of all external electronic devices is not the standing mode. The electronic device may determine the first screen to be displayed on the display of the electronic device and the second screen to be displayed on the external electronic device, based on the condition not being met. The electronic device may control the external electronic device to display a screen at least partially identical to the screen displayed on the display module of the electronic device. The electronic device may provide the mirror view based on identifying that the condition for providing the expanded view is not met.

In an embodiment, the electronic device may change the screens displayed on the electronic devices for which the communication connection is established, based on identifying the folding state of the electronic device and/or the folding state of the external electronic device. The electronic device may provide an expanded screen through the electronic device and the external electronic device based on satisfying a condition for displaying the expanded screen, thereby enhancing user convenience.

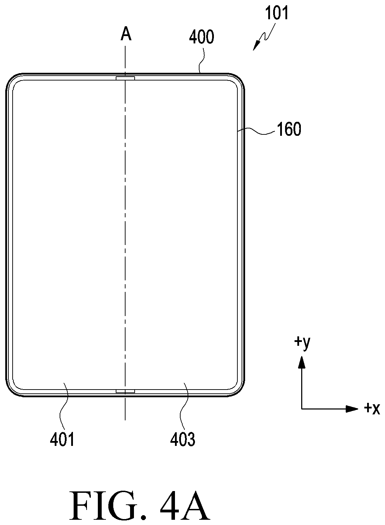

FIG. 4A is an example view illustrating an unfolded (open) state of an electronic device according to an embodiment of the disclosure.

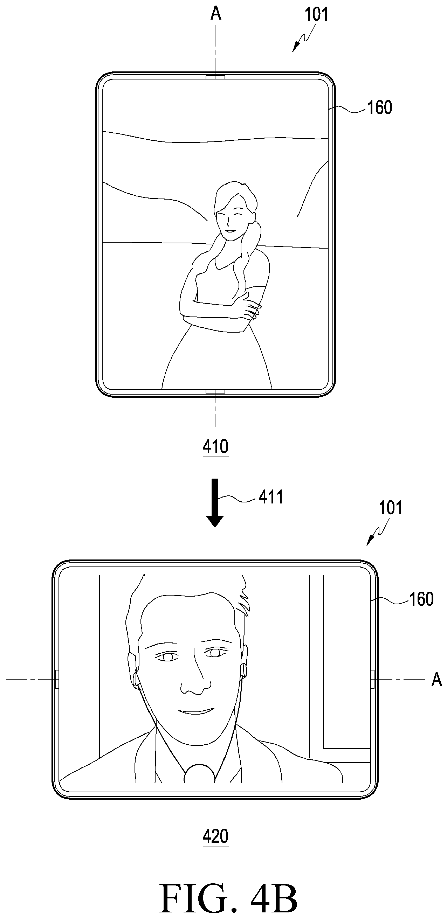

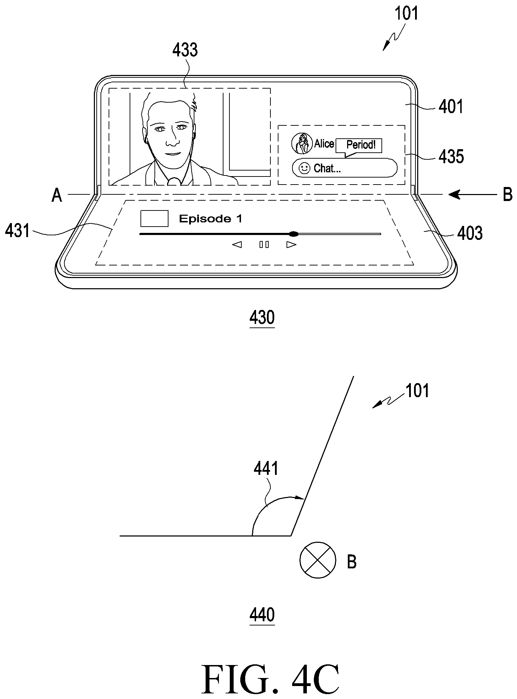

In an embodiment, the housing 400 of the electronic device 101 may be folded with respect to the folding line A. The housing 400 of the electronic device 101 may include a first housing 401 and a second housing 403 with respect to the folding line A. In an embodiment, when the length of the display module 160 in the +y direction is larger than the length of the display module 160 in the +x direction while the user views the electronic device 101, the folding state of the electronic device 101 may be referred to as a "vertical mode". In an embodiment, when the length of the display module 160 in the +y direction is smaller than the length of the display module 160 in the +x direction while the user views the electronic device 101, the folding state of the electronic device 101 may be referred to as a "horizontal mode". In an embodiment, a plurality of antennas for positioning the external electronic device may be disposed on the housing 400 of the electronic device 101 or may be disposed in the housing 400, and the position thereof is not limited. For example, the plurality of antennas may be implemented as metal antennas on the housing 400 or may be implemented as laser direct structuring (LDS) antennas in the housing 400. Although FIG. 4 illustrates that the housing 400 of the electronic device 101 includes only one folding line A, the housing 400 of the electronic device 101 may be implemented as a housing including two or more folding lines, but is not limited thereto.

In an embodiment, the electronic device 101 may be a foldable device including a first housing 401 and a second housing 403. The folding state may be determined according to the folding angle formed by the first housing 401 and the second housing 403.

FIG. 4B is an example view illustrating a vertical mode and a horizontal mode of an electronic device according to an embodiment of the disclosure.

In an embodiment, referring to FIG. 4B, the electronic device 101 may change the direction of the screen displayed on the display module 160 according to the folding state of the electronic device 101. The screen may include at least one of text, an image, or a video.

In an embodiment, referring to reference numeral 410, when it is identified that the folding state of the electronic device 101 is the vertical mode, the electronic device 101 may set the direction of the screen displayed through the display module 160 to correspond to the vertical mode (or portrait mode). The electronic device 101 may identify (411) that the housing of the electronic device 101 is rotated, based on the information identified by the sensor module 176. For example, the electronic device 101 may identify that the folding state of the electronic device 101 is changed from the vertical mode to the horizontal mode due to rotation of the housing of the electronic device 101. When identifying that the folding state of the electronic device 101 is the horizontal mode, the electronic device 101 may change the direction of the screen displayed through the display module 160 to correspond to the horizontal mode (or landscape mode).

FIG. 4C is an example view illustrating a standing mode of an electronic device according to an embodiment of the disclosure.

In an embodiment, the electronic device 101 (or an application processor) may identify that the folding state of the electronic device 101 is the standing mode, based on the information obtained or identified by the sensor module 176. Referring to reference numeral 430, when the folding state of the electronic device 101 is the standing mode, the electronic device 101 may display different screens on the display area corresponding to the first housing 401 and the display area corresponding to the second housing 403 of the electronic device 101 with respect to the folding line A. For example, when the application executed by the electronic device 101 is an application associated with a video stream, the electronic device 101 may display a screen 433 associated with the video stream on at least a portion of an area corresponding to the first housing 401. For example, when an application executed by the electronic device 101 supports a real-time chatting function, the electronic device 101 may display a screen 435 associated with real-time chatting on the remaining portion of the area corresponding to the first housing 401. The electronic device 101 may display an input interface 431 associated with a media controller for controlling playback of a video stream on an area corresponding to the second housing 403.

In an embodiment, reference numeral 440 illustrates the electronic device 101 in the standing mode viewed from the side surface B of the electronic device 101. For example, the electronic device 101 may identify whether the folding state of the electronic device 101 is the standing mode by identifying whether the folding angle 441 of the electronic device 101 identified by the sensor module 176 is within a set range. For example, when the folding angle 441 of the electronic device 101 is within the set range, the electronic device 101 may identify that the folding state of the electronic device 101 is the standing mode. For example, when the folding angle of the electronic device 101 is out of the set range, the electronic device 101 may identify that the folding state of the electronic device 101 is not the standing mode. For example, when the folding angle of the electronic device 101 is out of the set range, the electronic device 101 may identify that the folding state of the electronic device 101 is the closed state. For example, when the folding angle of the electronic device 101 is out of the set range, the electronic device 101 may identify that the folding state of the electronic device 101 is the open state, and may further identify whether the electronic device is in the vertical mode or the horizontal mode.

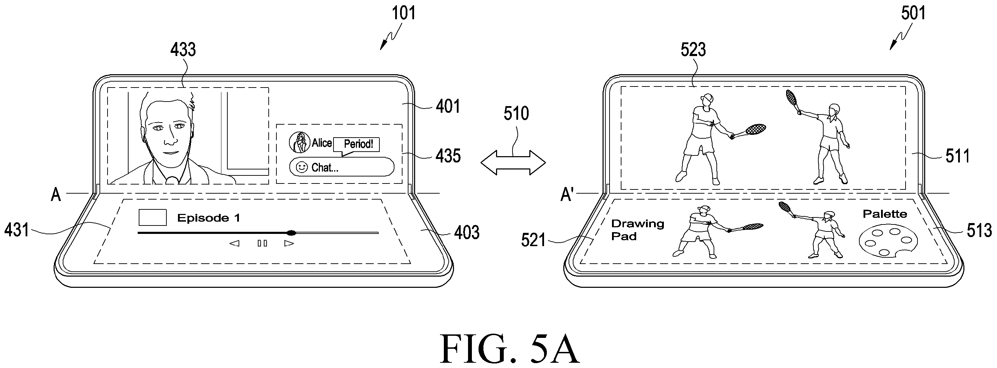

FIG. 5A is a view illustrating a communication connection establishment operation of an electronic device according to an embodiment of the disclosure.

In an embodiment, referring to FIG. 5A, the electronic device 101 may establish a communication connection 510 (e.g., a short-range wireless communication connection) with the external electronic device 501. For example, when the application executed by the electronic device 101 is an application associated with a video stream, the electronic device 101 may display a screen 433 associated with the video stream on at least a portion of an area corresponding to the first housing 401. For example, when an application executed by the electronic device 101 supports a real-time chatting function, the electronic device 101 may display a screen 435 associated with real-time chatting on the remaining portion of the area corresponding to the first housing 401. The electronic device 101 may display an input interface 431 associated with a media controller for controlling playback of a video stream on an area corresponding to the second housing 403. For example, when an application executed by the external electronic device 501 is an application associated with a drawing function, the external electronic device 501 may display a screen 523 associated with a sketch on an area corresponding to the first housing 511 of the external electronic device 501. The external electronic device 501 may display a screen 521 associated with the drawing pad on an area corresponding to the second housing 513 of the external electronic device 501. The external electronic device 501 may be an electronic device that may be folded with respect to the folding line A', and the specifications of the external electronic device 501 are not limited to that illustrated in FIG. 5A. For example, the external electronic device may be a foldable electronic device including a plurality of folding lines.

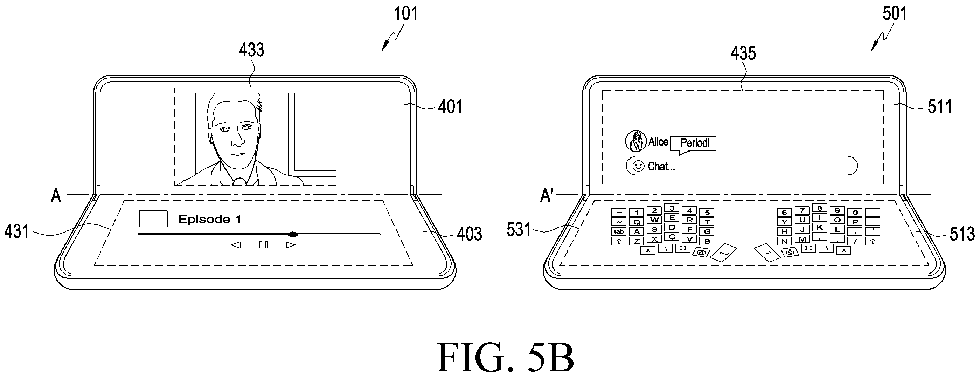

FIG. 5B is a view illustrating a pairing operation of an electronic device according to an embodiment of the disclosure.

In an embodiment, referring to FIG. 5B, the electronic device 101 may provide an expanded view through the display module of the electronic device and the display module of the external electronic device. The electronic device 101 may provide an expanded view based on identifying that both the folding state of the electronic device 101 and the folding state of the external electronic device 501 are the standing mode. The electronic device 101 may display a screen 433 associated with a video stream on an area corresponding to the first housing 401. The electronic device 101 may display an input interface 431 associated with a media controller for controlling playback of a video stream on an area corresponding to the second housing 403. The electronic device 101 may control the external electronic device 501 to display a screen 435 associated with real-time chatting on an area corresponding to the first housing 511 of the external electronic device 501. For example, the electronic device 101 may control the external electronic device 501 so that the screen 531 associated with the touch screen keyboard is displayed on an area corresponding to the second housing 513 of the external electronic device 501. The electronic device 101 may provide an expanded view through the display module of the electronic device and the display module of the external electronic device, thereby providing an expanded user experience.

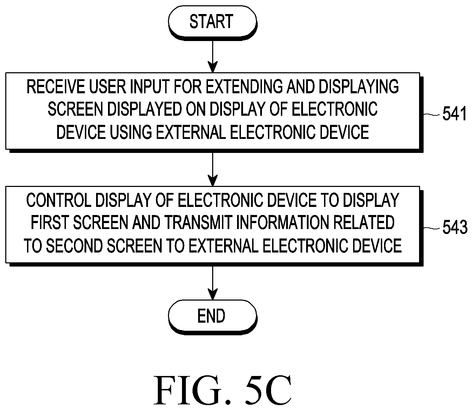

FIG. 5C is a flowchart illustrating a pairing operation of an electronic device according to an embodiment of the disclosure.

Referring to FIG. 5C, in operation 541, an electronic device (e.g., at least one of the electronic device 101 of FIG. 1, the electronic device 101 of FIG. 2, the processor 120 of FIG. 1, or the processor 120 of FIG. 2) may receive a user input for expanding a screen displayed on a display (e.g., the display module 160 of FIG. 1 or 2) of the electronic device using an external electronic device (e.g., at least one of the electronic device 102, the electronic device 104, or the server 108 of FIG. 1). In an embodiment, the external electronic device may be an electronic device that has established a communication connection with the electronic device. The user input may include a touch input or a voice input that enables the electronic device to perform paging with the external electronic device, but is not limited thereto.

According to an embodiment, in response to the user input, in operation 543, the electronic device may control the display of the electronic device to display the first screen, and may transmit information related to the second screen to the external electronic device. In an embodiment, the first screen may correspond to at least a portion of an expanded screen of the screen displayed on the display of the electronic device before receiving the user input. The second screen may correspond to the remaining portion of the expanded screen. In an embodiment, the electronic device may determine the first screen to be displayed on the display of the electronic device and the second screen to be displayed on the external electronic device, based on receiving the information associated with the external electronic device from the external electronic device. The electronic device may identify a folding state (or an operation mode corresponding to the folding state) of the electronic device through at least one sensor (e.g., the sensor module 176 of FIG. 1 or 2). The electronic device may identify a folding state (or an operation mode corresponding to the folding state) of the external electronic device, based on the information associated with the external electronic device. Based on identifying that both the operation mode corresponding to the electronic device and the operation mode corresponding to the external electronic device are the standing mode, the electronic device may control the display module of the electronic device to display at least a portion of the expanded screen and transmit information related to the screen to the external electronic device to display the remaining portion of the expanded screen. In an embodiment, the screen displayed on the external electronic device may be a portion different from at least a portion of the expanded screen displayed through the display module of the electronic device. When both the electronic device and the external electronic device operate in the standing mode, the electronic device may provide an expanded view through the display module and the display module of the external electronic device, thereby enhancing user convenience.

In an embodiment, the first screen and the second screen may be the same screen. Based on identifying that the operation mode corresponding to the folding state of the electronic device or the operation mode corresponding to the folding state of the external electronic device is not the standing mode, the electronic device may control the external electronic device to display a screen at least partially identical to the screen displayed on the display module of the electronic device. For example, the electronic device may control the display of the electronic device to display a screen at least partially identical to the screen displayed before pairing with the external electronic device, and may transmit information related to the screen at least partially identical to the screen displayed through the display of the electronic device to the external electronic device.

In an embodiment, the electronic device may determine screens displayed on the electronic devices for which the communication connection is established, based on identifying the folding state of the electronic device and/or the folding state of the external electronic device. The electronic device may provide the expanded screen through the electronic device and the external electronic device based on receiving the user input for extending and displaying the screen displayed on the display of the electronic device using the external electronic device, thereby enhancing user convenience. Advantageously, the user may determine whether the electronic device and the external electronic device display different screens or the same screen according to a folding state of one or both of the electronic device and the external electronic device. This improves a user control of the electronic device and the external electronic device since it is not necessary for the user to navigate through various menu or settings options in order to control the content displayed on the two electronic devices.

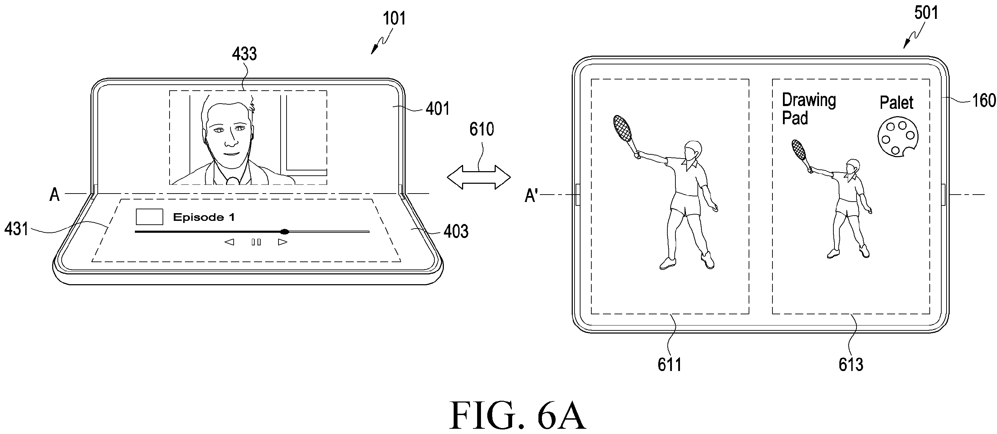

FIG. 6A is a view illustrating a communication connection establishment operation of an electronic device according to an embodiment of the disclosure.

In an embodiment, referring to FIG. 6A, the electronic device 101 may establish a communication connection 610 (e.g., a short-range wireless communication connection) with the external electronic device 501. For example, when the application executed by the electronic device 101 is an application associated with a video stream, the electronic device 101 may display a screen 433 associated with the video stream on an area corresponding to the first housing 401. The electronic device 101 may display an input interface 431 associated with a media controller for controlling playback of a video stream on an area corresponding to the second housing 403. For example, when the application executed by the external electronic device 501 is an application associated with the drawing function, the external electronic device 501 may display the screen 611 associated with the sketch and the screen 613 associated with the drawing pad on the display of the external electronic device 501.

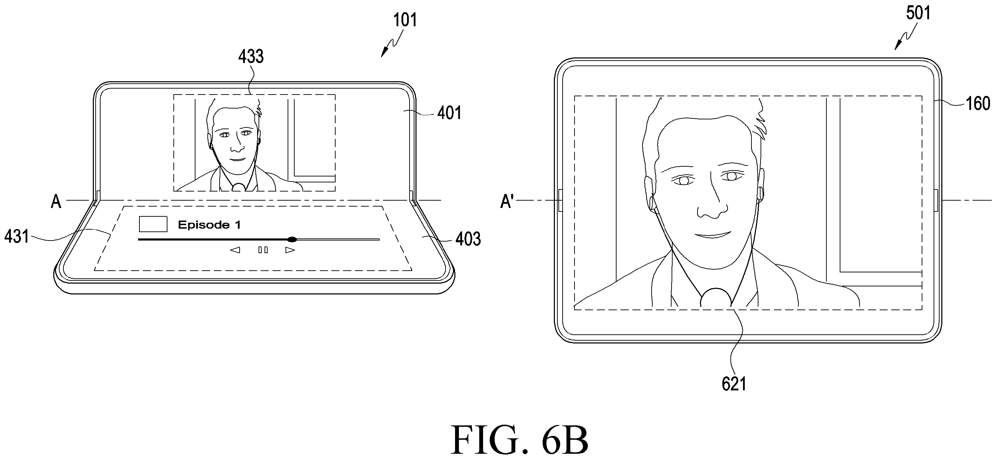

FIG. 6B is a view illustrating a pairing operation of an electronic device according to an embodiment of the disclosure.

In an embodiment, referring to FIG. 6B, the electronic device 101 may provide a mirror view through the display module of the electronic device and the display module of the external electronic device. The electronic device 101 may provide a mirror view based on identifying that the folding state of the electronic device 101 or the folding state of the external electronic device 501 is not the standing mode. The electronic device 101 may display a screen 433 associated with a video stream on an area corresponding to the first housing 401. The electronic device 101 may display an input interface 431 associated with a media controller for controlling playback of a video stream on an area corresponding to the second housing 403. The electronic device 101 may display a screen 621 associated with the video stream on the display of the external electronic device 501. The electronic device 101 may provide a mirror view based on identifying that the first condition for providing the expanded view is not met.

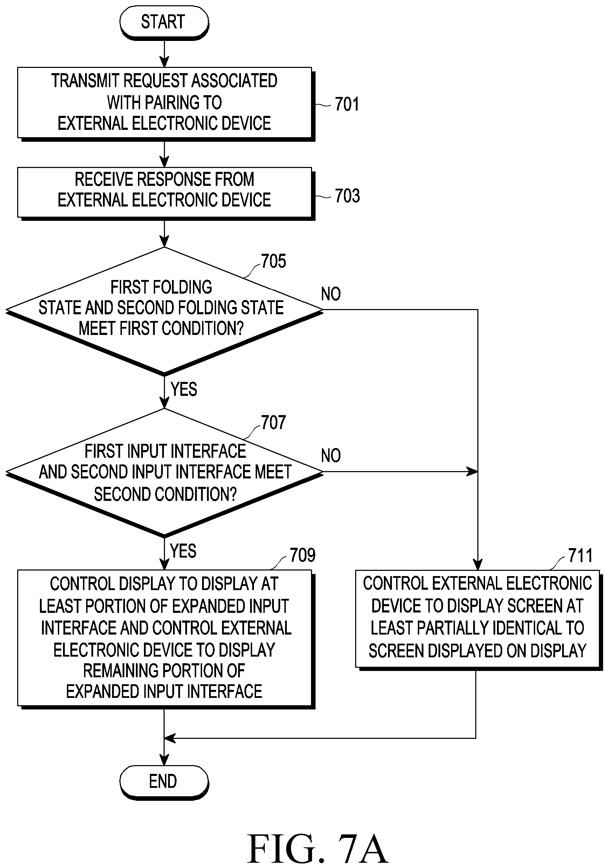

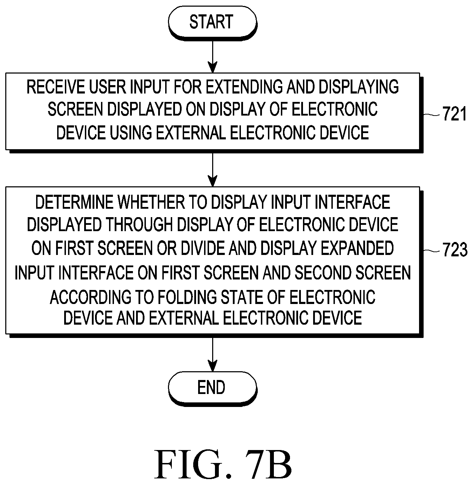

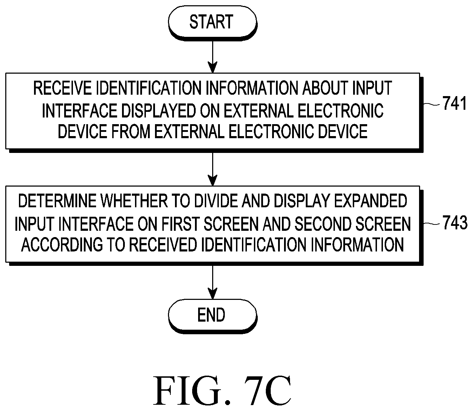

FIG. 7 is a flowchart illustrating a pairing operation of an electronic device according to an embodiment.

Referring to FIG. 7A, in operation 701, an electronic device (e.g., at least one of the electronic device 101 of FIG. 1, the electronic device 101 of FIG. 2, the processor 120 of FIG. 1, or the processor 120 of FIG. 2) may transmit a request associated with pairing to an external electronic device (e.g., at least one of the electronic device 102, the electronic device 104, or the server 108 of FIG. 1). The electronic device 101 may be configured to identify whether to provide an expanded view when pairing is performed based on a user input. The electronic device 101 may identify a user input for activating the multi-view function. The electronic device 101 may identify at least one external electronic device whose physical distance to the electronic device 101 is less than or equal to a threshold, based on or in response to receiving a user input for activating the multi-view function. The electronic device 101 may identify at least one external electronic device through a short-range wireless communication module (e.g., at least one of a Wi-Fi module, a Bluetooth module, and/or a UWB module). The electronic device 101 may provide the user with a list associated with the identified at least one external electronic device. That is, the electronic device may provide the user with a list containing at least one of the identified external electronic devices which have been found by the electronic device. The electronic device 101 may provide the list associated with at least one identified external electronic device to the user through at least one of, e.g., the display module 160, the sound output module 155, or the haptic module 179. The electronic device 101 may identify a user input associated with a selection of the external electronic device to perform pairing. The electronic device 101 may identify identification information about the external electronic device corresponding to the user input, based on or in response to the user input associated with selection of the external electronic device. The electronic device 101 may transmit a request associated with pairing to the identified external electronic device through a communication module (e.g., the communication module 190 of FIG. 1).

According to an embodiment, in operation 703, the electronic device 101 may receive a response from the external electronic device. The electronic device 101 may establish a communication connection with the external electronic device based on receiving a response from the external electronic device. The electronic device 101 may identify information associated with the state of the external electronic device included in the response. The electronic device 101 may identify a distance between the electronic device 101 and the external electronic device. In an embodiment, after establishing the communication connection with the external electronic device, the electronic device 101 may identify the distance between the electronic device 101 and the external electronic device. For example, the electronic device 101 may identify the distance between the electronic device 101 and the external electronic device through the positioning function supported by the UWB module included in the communication module 190. The UWB module may exchange positioning information with the UWB module of the external electronic device through a plurality of antennas included in the electronic device 101. For example, the UWB module may identify the distance between the electronic device 101 and the external electronic device based on a PDoA algorithm, but it will be easily understood by one of ordinary skill in the art that the disclosure is not limited thereto. In an embodiment, the electronic device 101 may identify an angle difference between the electronic device 101 and the external electronic device, based on the information included in the response. The electronic device 101 may identify an angle difference between the posture angle of the electronic device 101 and the posture angle of the external electronic device. The electronic device 101 may identify the posture angle of the electronic device 101 based on the information identified by the sensor module 176. The electronic device 101 may identify the posture angle of the external electronic device based on the information included in the response. In an embodiment, the electronic device 101 may identify the folding state of the external electronic device, based on the information included in the response. For example, the electronic device 101 may identify whether the folding state of the external electronic device is the open state or the closed state, based on the information included in the response. The electronic device 101 may identify whether the folding state of the external electronic device is any one of the horizontal mode, the vertical mode, or the standing mode among the open states. In an embodiment, after operation 703, the electronic device 101 may transmit information associated with the state of the electronic device 101 to the external electronic device and may receive the information associated with the state of the external electronic device from the external electronic device. The electronic device 101 may perform positioning using, e.g., a UWB module and transmit information associated with the state of the electronic device 101 including distance data, sensor data, posture information, or input interface information to the external electronic device. The electronic device 101 may use a short-range communication module (e.g., at least one of a UWB module, a Wi-Fi module, or a Bluetooth module) to transmit state-related information to the external electronic device. The electronic device 101 may transmit and receive (or exchange) information associated with the state of the electronic device 101 and information associated with the state of the external electronic device, thereby identifying information associated with at least one of the distance between the electronic device 101 and the external electronic device, the angle difference between the electronic device 101 and the external electronic device, the folding state of the external electronic device, or the type of the input interface of the external electronic device.

According to an embodiment, in operation 705, the electronic device may identify whether the first folding state and the second folding state meet a first condition. For example, the electronic device may identify whether the first folding state of the electronic device 101 and the second folding state of the external electronic device meet the first condition for displaying an expanded screen, based on the information included in the response and the information identified by the sensor module 176. For example, the electronic device 101 may identify that the first condition is met, based on identifying that the folding state of both the electronic device 101 and the external electronic device is the standing mode. For example, the electronic device 101 may identify that the first condition is not met, based on identifying that the folding state of any one of the electronic device 101 or the external electronic device is not the standing mode. Based on identifying that the first condition is not met (No in operation 705), the electronic device 101 may control the external electronic device to display a screen at least partially identical to the screen displayed on the display. The electronic device 101 may provide a mirror view based on identifying that the first condition is not met.

According to an embodiment, based on identifying that the first condition is met (Yes in operation 705), in operation 707, the electronic device 101 may identify whether the first input interface and the second input interface meet the second condition. In an embodiment, the second condition may include that the identification information about the first input interface and the identification information about the second input interface are the same. In an embodiment, the electronic device 101 may identify information associated with at least one of types of the input interfaces of the external electronic device. The information associated with the type of the input interface corresponding to the external electronic device may include, e.g., label information of an integer type. The electronic device 101 may identify whether the type of the input interface corresponding to the application executed by the electronic device 101 matches the type of the input interface displayed by the external electronic device, based on the label information. The information associated with the type of the input interface corresponding to the external electronic device is not limited to the above-described example. For example, information associated with the type of the input interface corresponding to the external electronic device may be transmitted to the electronic device 101 in the form of a binary code.

In an embodiment, based on identifying that the first input interface and the second input interface meet the second condition (No in operation 707), in operation 709, the electronic device 101 may control the display module 160 to display at least a portion of the expanded screen and may control the external electronic device to display the remaining portion of the expanded screen. The electronic device 101 may enhance user convenience by providing an expanded view through the display module 160 and the display module of the external electronic device.

FIG. 7B is a flowchart illustrating a pairing operation of an electronic device according to an embodiment of the disclosure.

Referring to FIG. 7B, in operation 721, an electronic device (e.g., at least one of the electronic device 101 of FIG. 1, the electronic device 101 of FIG. 2, the processor 120 of FIG. 1, or the processor 120 of FIG. 2) may receive a user input for extending and displaying a screen displayed on a display (e.g., the display module 160 of FIG. 1 or 2) of the electronic device using the external electronic device (e.g., at least one of the electronic device 102, the electronic device 104, or the server 108 of FIG. 1). In an embodiment, the external electronic device may be an electronic device that has established a communication connection with the electronic device. The user input may include, e.g., a touch input or a voice input that enables the electronic device to perform paging with the external electronic device, but is not limited thereto.

According to an embodiment, in response to the user input, in operation 723, the electronic device may determine whether to display the input interface displayed through the display of the electronic device on the first screen or to display at least part of the expanded input interface on the first screen and a remaining part of the expanded input interface on the second screen, according to the folding state of the electronic device and the folding state of the external electronic device. When the screen displayed on the display of the electronic device before the user input includes the input interface, the electronic device may determine whether to display the input interface displayed through the display of the electronic device on the first screen or to display the expanded input interface separately on the first screen and the second screen, based on the folding state of the electronic device and the folding state of the external electronic device. The expanded input interface may be an input interface expanded in the horizontal and/or vertical direction of the input interface. In an embodiment, based on identifying that both the operation mode corresponding to the folding state of the electronic device and the operation mode corresponding to the folding state of the external electronic device are the standing mode, the electronic device may divide the expanded input interface and display the at least part of the expanded input interface on the first screen and the remaining part of the expanded input interface on the second screen. The electronic device, for example, may divide and display the expanded input interface on the first screen corresponding to the electronic device and the second screen corresponding to the external electronic device. The electronic device may enhance user convenience by displaying the expanded input interface through the display of the electronic device operating in the standing mode and the display of the external electronic device. In an embodiment, the electronic device may display the input interface displayed through the display of the electronic device on the first screen corresponding to the electronic device, based on identifying that the operation mode corresponding to the folding state of the electronic device or the operation mode corresponding to the folding state of the external electronic device is not the standing mode.

FIG. 7C is a flowchart illustrating a pairing operation of an electronic device according to an embodiment of the disclosure.

Referring to FIG. 7C, in operation 741, an electronic device (e.g., at least one of the electronic device 101 of FIG. 1, the electronic device 101 of FIG. 2, the processor 120 of FIG. 1, or the processor 120 of FIG. 2) may receive identification information about an input interface displayed on the external electronic device from the external electronic device. The identification information about the input interface displayed on the external electronic device may include, e.g., label information of an integer type. The identification information about the input interface corresponding to the external electronic device is not limited to the above-described example. For example, the identification information about the input interface displayed on the external electronic device may be transmitted to the electronic device in the form of a binary code.

According to an embodiment, according to the received identification information, in operation 743, the electronic device may determine whether to divide the expanded input interface, and display at least part of the expanded input interface on the first screen and the remaining part of the expanded input interface on the second screen. In an embodiment, the electronic device may identify whether the identification information about the input interface displayed through the display of the electronic device corresponds to the identification information received from the external electronic device. Based on identifying that the identification information about the input interface displayed through the display of the electronic device corresponds to the identification information received from the external electronic device, the electronic device may divide and display the expanded input interface on the first screen corresponding to the electronic device and the second screen corresponding to the external electronic device. The expanded input interface may be an expanded interface of the input interface displayed through the display of the electronic device before identifying a user input for extending and displaying the screen displayed on the display of the electronic device using the external electronic device. The electronic device may provide the expanded interface through the display of the electronic device and the display of the external electronic device, thereby enhancing user convenience. Based on identifying that the identification information about the input interface displayed through the display of the electronic device does not correspond to the identification information received from the external electronic device, the electronic device may display the input interface displayed through the display of the electronic device before the identification of the user input on the first screen.

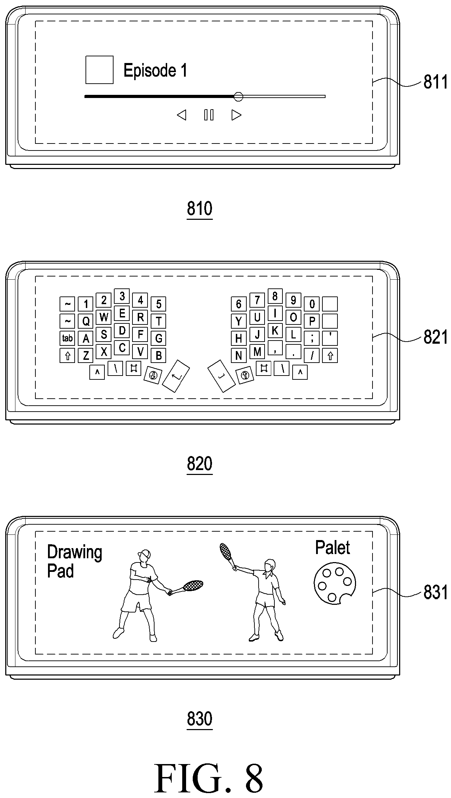

FIG. 8 is an example view illustrating an input interface displayed through a display of an electronic device according to an embodiment of the disclosure.

In an embodiment, referring to reference numeral 810, the input interface may include an input interface 811 associated with a media controller for controlling playback of a video stream. Referring to reference numeral 820, the input interface may include an input interface 821 associated with a touch screen keyboard. Referring to reference numeral 830, the input interface may include an input interface 831 associated with a drawing pad. The example of the input interface is not limited to the above-described example. For example, the input interface may include an input interface associated with a camera controller or an input interface associated with a gaming pad. Each input interface may be labeled with integer-type identification information.

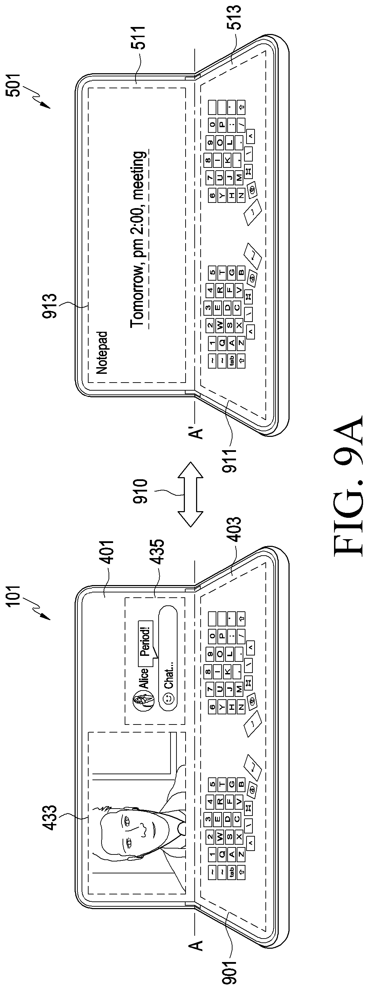

FIG. 9A is a view illustrating a communication connection establishment operation of an electronic device according to an embodiment of the disclosure.

In an embodiment, referring to FIG. 9A, the electronic device 101 may establish a communication connection 910 (e.g., a short-range wireless communication connection) with the external electronic device 501. For example, when the application executed by the electronic device 101 is an application associated with a video stream, the electronic device 101 may display a screen 433 associated with the video stream on at least a portion of an area corresponding to the first housing 401. For example, when an application executed by the electronic device 101 supports a real-time chatting function, the electronic device 101 may display a screen 435 associated with real-time chatting on the remaining portion of the area corresponding to the first housing 401. The electronic device 101 may display an input interface 901 associated with a touch screen keyboard for real-time chatting on an area corresponding to the second housing 403. For example, when the application executed by the external electronic device 501 is an application associated with the note function, the external electronic device 501 may display a screen 913 associated with the note on an area corresponding to the first housing 511 of the external electronic device 501. The external electronic device 501 may display a screen 911 associated with a touch screen keyboard on an area corresponding to the second housing 513 of the external electronic device 501.

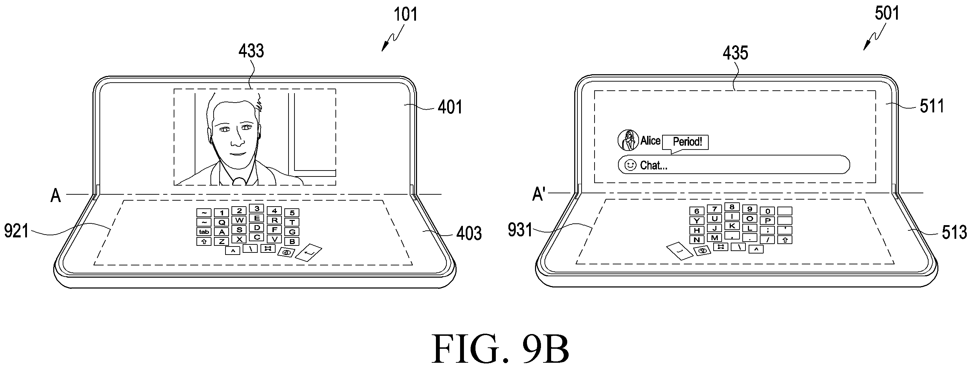

FIG. 9B is a view illustrating a pairing operation of an electronic device according to an embodiment of the disclosure.

In an embodiment, referring to FIG. 9B, the electronic device 101 may provide an expanded view through the display module of the electronic device and the display module of the external electronic device. The electronic device 101 may identify that both the folding state of the electronic device 101 and the folding state of the external electronic device 501 are the standing mode, and may provide the expanded input interface based on identifying that the input interfaces are the same. The electronic device 101 may display a screen 433 associated with a video stream on an area corresponding to the first housing 401. The electronic device 101 may display at least a portion 921 of an input interface associated with a touch screen keyboard on an area corresponding to the second housing 403. The electronic device 101 may control the external electronic device 501 to display a screen 435 associated with real-time chatting on an area corresponding to (provided on) the first housing 511 of the external electronic device 501. For example, the electronic device 101 may control the external electronic device 501 so that the remaining portion 931 of the screen associated with the touch screen keyboard is displayed on an area corresponding to the second housing 513 of the external electronic device 501. The electronic device 101 may provide an expanded user experience by providing an expanded input interface through the display module of the electronic device and the display module of the external electronic device.

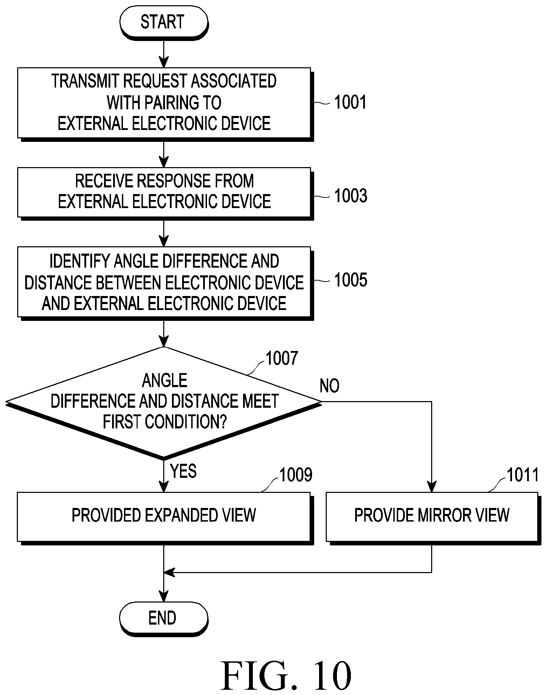

FIG. 10 is a view illustrating a pairing operation of an electronic device according to an embodiment of the disclosure. In FIG. 10, the description portions overlapping those found in FIG. 3 and/or FIG. 7 may not be repeated.

In an embodiment, the electronic device may determine a first screen to be displayed on the display of the electronic device and a second screen to be displayed on the external electronic device, based on at least one of information associated with a distance or information associated with an angle between the electronic device and the external electronic device.

Referring to FIG. 10, in operation 1001, an electronic device (e.g., at least one of the electronic device 101 of FIG. 1, the electronic device 101 of FIG. 2, the processor 120 of FIG. 1, or the processor 120 of FIG. 2) may transmit a request associated with pairing to an external electronic device (e.g., at least one of the electronic device 102, the electronic device 104, or the server 108 of FIG. 1).

According to an embodiment, in operation 1003, the electronic device 101 may receive a response from the external electronic device.

According to an embodiment, in operation 1005, the electronic device 101 may identify an angle difference and a distance between the electronic device and the external electronic device. In an embodiment, after operation 1003, the electronic device 101 may transmit information associated with the state of the electronic device 101 to the external electronic device and may receive the information associated with the state of the external electronic device from the external electronic device. The electronic device 101 may perform positioning using, e.g., a UWB module and transmit information associated with the state of the electronic device 101 including distance data, sensor data, posture information, or input interface information to the external electronic device. The electronic device 101 may use a short-range communication module (e.g., at least one of a UWB module, a Wi-Fi module, or a Bluetooth module) to transmit state-related information to the external electronic device. The electronic device 101 may transmit and receive (or exchange) information associated with the state of the electronic device 101 and information associated with the state of the external electronic device, thereby identifying information associated with at least one of the distance between the electronic device 101 and the external electronic device, the angle difference between the electronic device 101 and the external electronic device, the folding state of the external electronic device, or the type of the input interface of the external electronic device.

According to an embodiment, in operation 1007, the electronic device may identify whether each of the angle difference and the distance meet the first condition. The electronic device may identify whether each of the angle difference and the distance are within a set range, based on the information included in the response and the information identified by the sensor module 176.

According to an embodiment, based on identifying that the first condition is met (Yes in operation 1007), in operation 1009, the electronic device 101 may provide an expanded view. The electronic device 101 may control the display module 160 to display at least a portion of the expanded screen, and may control the external electronic device to display the remaining portion of the expanded screen. The electronic device 101 may enhance user convenience by providing an expanded view through the display module 160 and the display module of the external electronic device.

According to an embodiment, based on identifying that the first condition is not met (No in operation 1007), in operation 1011, the electronic device 101 may provide a mirror view.

According to an embodiment, an electronic device (e.g., the electronic device 101 of FIG. 1) may comprise a display (e.g., the display module 160 of FIG. 1), communication circuitry (e.g., the communication module 190 of FIG. 1), at least one sensor (e.g., the sensor module 176 of FIG. 1), at least one processor (e.g., the processor 120 of FIG. 1) electrically coupled with the display 160, the communication circuitry 190, and the at least one sensor 176, and memory (e.g., memory 130 of FIG. 1). The instructions, when executed by the at least one processor 120 individually or collectively, may cause the electronic deice 101 to receive, from an external device (e.g., at least one of the electronic device 102, the electronic device 104, the server 108 of FIG. 1 or the external electronic device 501 of FIG. 5), information related to the external electronic device connected to a network through the communication circuitry 190. The instructions, when executed by the at least one processor 120 individually or collectively, may cause the electronic deice 101 to identify a folding state of the external electronic device 102; 104; 108; 501 based on the information related to the external electronic device 102; 104; 108; 501. The instructions, when executed by the at least one processor 120 individually or collectively, may cause the electronic deice 101 to identify a folding state of the electronic device 101 through the at least one sensor 176. The instructions, when executed by the at least one processor 120 individually or collectively, may cause the electronic deice 101 to determine a first screen to be displayed on the display of the electronic device and a second screen to be displayed on the external electronic device 102; 104; 108; 501, based on the folding state of the electronic device and the folding state of the external electronic device.

In an embodiment, the instructions, when executed by the at least one processor 120 individually or collectively, may cause the electronic deice 101 to receive a user input to expand a screen displayed on the display of the electronic device using the external electronic device. The at least one processor 120 may be further configured to, in response to the user input, control the display of the electronic device to display the first screen and transmit information related to the second screen to the external electronic device.

In an embodiment, the first screen may correspond to at least a portion of an expanded screen expanded from a screen displayed on the display of the electronic device before receiving the user input, and the second screen may correspond to a remaining portion of the expanded screen.

In an embodiment, the first screen and the second screen may be identical.

In an embodiment, the folding state of the electronic device 101 may be determined depending on whether a folding angle of the electronic device identified through at least one sensor 176 is within a set range.

In an embodiment, the instructions, when executed by the at least one processor 120 individually or collectively, may cause the electronic deice 101 to, when a screen displayed on the display of the electronic device before receiving the user input includes an input interface, based on receiving the user input to expand the screen displayed on the display of the electronic device 101 using the external electronic device 102; 104; 108; 501, determine, depending on the folding state of the electronic device and the folding state of the external electronic device, whether to display the input interface on the first screen, or to display a portion of an expanded input interface expanded from the input interface on the first screen and a remaining portion of the expanded input interface on the second screen.

In an embodiment, the instructions, when executed by the at least one processor 120 individually or collectively, may cause the electronic deice 101 to receive, from the external electronic device, identification information of an input interface displayed on the external electronic device. The instructions, when executed by the at least one processor 120 individually or collectively, may cause the electronic deice 101 to determine, according to the received identification information, whether to divide the expanded input interface expanded from the input interface and display a portion of the expanded input interface on the first screen and a remaining portion of the expanded input interface on the second screen.

In an embodiment, the electronic device 101 may be a foldable device including a first housing 401 and a second housing 403. The folding state may be determined corresponding to a folding angle formed by the first housing 401 and the second housing 403.

In an embodiment, the instructions, when executed by the at least one processor 120 individually or collectively, may cause the electronic deice 101 to identify the folding state of the electronic device and the folding state of the external electronic device upon receiving a user input to expand the screen displayed on the display 160 of the electronic device using the external electronic device 102; 104; 108; 501, when a screen displayed on the display of the electronic device 101 before receiving the user input includes an input interface; and. The instructions, when executed by the at least one processor 120 individually or collectively, may cause the electronic deice 101 to divide an expanded input interface expanded from the input interface and display a portion of the expanded input interface on the first screen and a remaining portion of the expanded input interface on the second screen, based on identifying that both an operating mode corresponding to the folding state of the electronic device and an operating mode corresponding to the folding state of the external electronic device are a standing mode.

In an embodiment, the instructions, when executed by the at least one processor 120 individually or collectively, may cause the electronic deice 101 to determine the first screen to be displayed on the display of the electronic device 101 and the second screen to be displayed on the external electronic device 102; 104; 108; 501, based on at least one of information associated with a distance between the electronic device 101 and the external electronic device 102; 104; 108; 501 or information associated with an angle difference between the electronic device 101 and the external electronic device 102; 104; 108; 501.

In an embodiment, a method for operating an electronic device 101 may comprise receiving information related to an external electronic device 102; 104; 108; 501 from the external electronic device 102; 104; 108; 501 through communication circuitry 190 of the electronic device 101. The method for operating the electronic device 101 may comprise identifying a folding state of the external electronic device 102; 104; 108; 501 based on the information related to the external electronic device 102; 104; 108; 501. The method for operating the electronic device 101 may comprise identifying a folding state of the electronic device 101 through at least one sensor 176 of the electronic device 101. The method for operating the electronic device 101 may comprise determining a first screen to be displayed on a display of the electronic device 101 and a second screen to be displayed on the external electronic device 102; 104; 108; 501, based on the folding state of the electronic device 101 and the folding state of the external electronic device 102; 104; 108; 501.

In an embodiment, the method for operating the electronic device 101 may comprise receiving a user input to expand a screen displayed on the display of the electronic device 101 using the external electronic device 102; 104; 108; 501. The method for operating the electronic device 101 may comprise, in response to the user input, controlling the display of the electronic device 101 to display the first screen and transmitting information related to the second screen to the external electronic device 102; 104; 108; 501.

In an embodiment, the first screen may correspond to at least a portion of an expanded screen expanded from a screen displayed on the display of the electronic device 101 before receiving the user input, and the second screen may correspond to a remaining portion of the expanded screen.

In an embodiment, the first screen and the second screen may be identical.

In an embodiment, the folding state of the electronic device 101 may be determined depending on whether a folding angle of the electronic device identified through at least one sensor 176 is within a set range.

In an embodiment, the method for operating the electronic device 101 may further comprise, when a screen displayed on the display of the electronic device 101 before receiving the user input includes an input interface, based on receiving the user input to expand the screen displayed on the display 160 of the electronic device using the external electronic device 102; 104; 108; 501, determining whether to display the input interface on the first screen depending on the folding state of the electronic device and the folding state of the external electronic device, or to display a portion of an expanded input interface expanded from the input interface on the first screen and a remaining portion of the expanded input interface on the second screen.

In an embodiment, the method for operating the electronic device 101 may further comprise receiving, from the external electronic device, identification information of an input interface displayed on the external electronic device. The method for operating the electronic device 101 may further comprise determining, according to the received identification information, whether to divide the expanded input interface expanded from the input interface and display a portion of the expanded input interface on the first screen and a remaining portion of the expanded input interface on the second screen.

In an embodiment, the electronic device 101 may be a foldable device including a first housing 401 and a second housing 403. The folding state may be determined corresponding to a folding angle formed by the first housing 401 and the second housing 403.

In an embodiment, the method for operating the electronic device 101 may further comprise identifying the folding state of the electronic device and the folding state of the external electronic device upon receiving a user input to expand the screen displayed on the display 160 of the electronic device using the external electronic device 102; 104; 108; 501, when a screen displayed on the display of the electronic device before receiving the user input includes an input interface. The method for operating the electronic device 101 may further comprise dividing an expanded input interface expanded from the input interface and displaying a portion of the expanded input interface on the first screen and a remaining portion of the expanded input interface on the second screen, based on identifying that both an operating mode corresponding to the folding state of the electronic device and an operating mode corresponding to the folding state of the external electronic device are a standing mode.

In an embodiment, the method for operating the electronic device 101 may further comprise determining the first screen to be displayed on the display of the electronic device and the second screen to be displayed on the external electronic device, based on at least one of information associated with a distance between the electronic device (101) and the external electronic device (102; 104; 108; 501) or information associated with an angle difference between the electronic device (101) and the external electronic device (102; 104; 108; 501).

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (160);
communication circuitry (190);
at least one sensor (176);
at least one processor (120) electrically coupled with the display (160), the communication circuitry (190), and the at least one sensor (176); and
memory (130) storing instructions,
wherein the instructions, when executed by the at least one processor (120), cause the electronic device (101) to:
receive, through the communication circuitry (190), from an external electronic device (102; 104; 108; 501), information related to the external electronic device (102; 104; 108; 501) connected to a network;
identify a folding state of the external electronic device (102; 104; 108; 501), based on the received information related to the external electronic device (102; 104; 108; 501);
identify a folding state of the electronic device (101) using the at least one sensor (176); and
determine a first screen to be displayed on the display of the electronic device (101) and a second screen to be displayed on a display of the external electronic device (102; 104; 108; 501), based on the identified folding state of the electronic device (101) and the identified folding state of the external electronic device (102; 104; 108; 501).

2. The electronic device (101) of claim 1,
wherein the instructions, when executed by the at least one processor (120), cause the electronic device (101) to:
receive, by an input unit, a user input to expand a screen displayed on the display (160) of the electronic device (101) to the display of the external electronic device, and
in response to the user input, control the display (160) of the electronic device (101) to display the first screen on the electronic device and transmit information related to the second screen to the external electronic device.

3. The electronic device (101) of claim 1 or 2,
wherein the first screen corresponds to at least a portion of an expanded screen expanded from a screen displayed on the display (160) of the electronic device (101) before receiving the user input, and the second screen corresponds to a remaining portion of the expanded screen.

4. The electronic device (101) of claim 1 or claim 2,
wherein the first screen and the second screen are identical.

5. The electronic device (101) of any one of claims 1 to 4,
wherein the folding state of the electronic device (101) is determined based on whether a folding angle of the electronic device (101) identified through at least one sensor (176) is within a set range.

6. The electronic device (101) of any one of claims 2 to 5,
wherein the instructions, when executed by the at least one processor (120), cause the electronic device (101) to:
when a screen displayed on the display (160) of the electronic device (101) before receiving the user input includes an input interface, in response to receiving the user input to expand the screen displayed on the display (160) of the electronic device (101) using the external electronic device (102; 104; 108; 501), determine, based on the identified folding state of the electronic device and the identified folding state of the external electronic device, whether to display the input interface on the first screen or to display a portion of an expanded input interface expanded from the input interface on the first screen and a remaining portion of the expanded input interface on the second screen.

7. The electronic device (101) of any one of claims 1 to 6,
wherein the instructions, when executed by the at least one processor (120), cause the electronic device (101) to:
receive, from the external electronic device (102; 104; 108; 501), identification information of an input interface displayed on the external electronic device,
determine, based on the received identification information, whether to divide the expanded input interface expanded from the input interface and display a portion of the expanded input interface on the first screen and a remaining portion of the expanded input interface on the second screen.

8. The electronic device (101) of any one of claims 1 to 7,
wherein the electronic device (101) is a foldable device including a first housing (401) and a second housing (403), and the folding state is determined based on a folding angle formed by the first housing (401) and the second housing (403).

9. The electronic device (101) of any one of claims 1 to 8,
wherein the instructions, when executed by the at least one processor (120), cause the electronic device (101) to:
identify the folding state of the electronic device (101) and the folding state of the external electronic device upon receiving a user input to expand the screen displayed on the display (160) of the electronic device (101) using the external electronic device (102; 104; 108; 501), when a screen displayed on the display (160) of the electronic device (101) before receiving the user input includes an input interface, and
divide an expanded input interface expanded from the input interface and display a portion of the expanded input interface on the first screen and a remaining portion of the expanded input interface on the second screen, based on identifying that both an operating mode corresponding to the folding state of the electronic device (101) and an operating mode corresponding to the folding state of the external electronic device are a standing mode.

10. The electronic device (101) of any one of claims 1 to 9,
wherein the instructions, when executed by the at least one processor (120), cause the electronic device (101) to:
determine the first screen to be displayed on the display (160) of the electronic device (101) and the second screen to be displayed on the external electronic device (102; 104; 108; 501), based on at least one of information associated with a distance between the electronic device (101) and the external electronic device (102; 104; 108; 501) or information associated with an angle difference between the electronic device (101) and the external electronic device (102; 104; 108; 501).

11. A method for operating an electronic device (101), the method comprising:
receiving information related to an external electronic device (102; 104; 108; 501) connected to a network from the external electronic device (102; 104; 108; 501) through communication circuitry (190) of the electronic device (101);
identifying a folding state of the external electronic device (102; 104; 108; 501) based on the received information related to the external electronic device (102; 104; 108; 501);
identifying a folding state of the electronic device (101) using at least one sensor (176) of the electronic device (101); and
determining a first screen to be displayed on a display of the electronic device (101) and a second screen to be displayed on a display of the external electronic device (102; 104; 108; 501), based on the identified folding state of the electronic device (101) and the identified folding state of the external electronic device (102; 104; 108; 501).

12. The method of claim 11, further comprising:
receiving, by an input unit, a user input to expand a screen displayed on the display (160) of the electronic device (101) using the display of the external electronic device (102; 104; 108; 501); and
in response to the user input, controlling the display (160) of the electronic device (101) to display the first screen on the electronic device and transmitting information related to the second screen to the external electronic device (102; 104; 108; 501).

13. The method of claim 11 or 12,
wherein the first screen corresponds to at least a portion of an expanded screen expanded from a screen displayed on the display (160) of the electronic device (101) before receiving the user input, and the second screen corresponds to a remaining portion of the expanded screen.

14. The method of claim 11 or 12,
wherein the first screen and the second screen are identical.

15. The method of any one of claims 11 to 14,
wherein the folding state of the electronic device (101) is determined based on whether a folding angle of the electronic device identified through at least one sensor (176) is within a set range.
